# FASCICULE DE BREVET EUROPEEN

(11) **EP 1 806 480 B1**
(45) Date de publication et mention de la délivrance du brevet: **11.03.2009**
(21) Numéro de dépôt: 06126375.2
(22) Date de dépôt: 18.12.2006
(51) Int. Cl.: F01D 17/16, C23C 4/04, F01D 5/30

(54) **Dispositif anti-usure pour pivot de guidage d'aube à angle de calage variable de compresseur de turbomachine**
Verschleissschutzvorrichtung für das Lager einer verstellbare Schaufeln des Verdichters einer Turbomaschine
Anti-wear device for the bearing of a variable angle vane in the compressor of a turbomachine

(30) Priorité: 06.01.2006 FR 0650064
(43) Date de publication de la demande: 11.07.2007
(73) Titulaire: SNECMA, 75015 Paris (FR)
(72) Inventeur: Lesnevsky, Leonid, 129278 Moscou (RU); Troshin, Alexander, 121352 Moscou (RU); Vigneau, Joël, 91750 Champcueil (FR)
(74) Mandataire: Boura, Olivier

(56) Documents cités:
- EP-A- 1 524 412
- EP-A- 1 524 413
- FR-A- 2 582 720
- US-A- 5 358 753

## Description

### Arrière-plan de l'invention

La présente invention se rapporte au domaine général des aubes à angle de calage variable. Elle trouve une application particulière dans le domaine de l'aéronautique, notamment pour la commande des positions angulaires d'aubes directrices d'entrée d'air dans des compresseurs de turbomachines.

Dans une turbomachine, le compresseur haute-pression se compose typiquement de plusieurs étages d'aubes à angle de calage variable qui permettent de modifier les caractéristiques d'écoulement des gaz selon les régimes de fonctionnement de la turbomachine.

Les aubes à angle de calage variable d'un même étage comportent chacune un pivot de commande en tête et un pivot de guidage en pied, le pivot de commande traversant une enveloppe de stator de la turbomachine et coopérant avec un organe de commande de l'orientation des aubes, et le pivot de guidage étant mobile en rotation dans une douille logée dans un évidement d'un anneau intérieur du carter de la turbomachine. A partir d'une action sur l'organe de commande, il est ainsi possible de modifier l'orientation des aubes de l'étage concerné.

Les aubes à angle de calage variable sont ainsi positionnées avec un seul degré de liberté par rotation de leur pivot de guidage dans la douille. Les douilles doivent donc transmettre à l'anneau intérieur du carter les efforts qui s'exercent sur l'aube et permettre le frottement avec le pivot de guidage de l'aube, c'est-à-dire qu'elles doivent offrir à la fois un faible coefficient de frottement et une forte résistance à l'usure.

Afin de satisfaire à ces exigences, il est connu, lorsque les pivots de guidage des aubes à angle de calage variable sont en acier, de réaliser les douilles dans un matériau à base de graphite. Or, dans les turbomachines modernes, les aubes à angle de calage variable sont soumises à de fortes contraintes mécaniques ce qui entraîne une usure prématurée de leur pivot de guidage. Les aubes doivent alors être remplacées après seulement quelques milliers d'heures de fonctionnement ce qui devient inacceptable en terme de coût.

EP 1 524 413 illustre cet état de la technique.

### Objet et résumé de l'invention

La présente invention a donc pour but principal de pallier de tels inconvénients en proposant une aube et une douille permettant d'obtenir un coefficient de frottement faible et une résistance à l'usure élevée.

Ce but est atteint grâce à une aube à angle de calage variable pour compresseur de turbomachine, comportant une douille montée de façon rotative autour d'un pivot de guidage de l'aube destiné à être monté sur un carter de la turbomachine, et dans laquelle, conformément à l'invention, le contact rotatif entre la douille et le pied est du type nickel graphite / titane.

La demanderesse a constaté que le graphite agit en tant que lubrifiant solide au cours d'un frottement continu, assurant ainsi un coefficient de frottement relativement faible, et que le frottement du graphite sur le titane entraîne la formation de carbure de titane sur les pics de rugosité assurant une grande résistance à l'usure entre la douille et le pivot de guidage de l'aube. Ainsi, la durée de vie des aubes, et notamment de leur pied, est augmentée.

Plusieurs variantes de réalisation sont envisageables. Selon un mode de réalisation de l'invention, lorsque le pivot de guidage est constitué d'un matériau à base de titane, la douille est constituée d'un matériau à base de nickel et de graphite. Dans ce cas, la douille peut être obtenue par frittage d'une poudre à base de nickel et de graphite dans un moule.

Selon un autre mode de réalisation de l'invention, lorsque le pivot de guidage n'est pas constitué d'un matériau métallique à base de titane, ledit pivot de guidage est recouvert d'un dépôt de nickel graphite et la douille est constituée d'un matériau à base de titane.

Alternativement, toujours dans le cas d'un pivot de guidage qui n'est pas constitué d'un matériau métallique à base de titane, l'aube peut en outre comporter une frette métallique recouverte d'un dépôt de nickel graphite et frettée sur le pivot de guidage, la douille étant alors constituée d'un matériau à base de titane.

Selon une autre alternative, toujours dans le cas d'un pivot de guidage qui n'est pas constitué d'un matériau métallique à base de titane, l'aube peut en outre comporter une frette constituée d'un matériau à base de nickel et de graphite et frettée sur le pivot de guidage, la douille étant alors constituée d'un matériau à base de titane.

Quel que soit le mode de réalisation choisi, lorsqu'il s'agit d'un dépôt de nickel graphite, celui-ci peut être réalisé par projection thermique d'une poudre à base de nickel et de graphite.

L'invention a aussi pour objet un compresseur de turbomachine et une turbomachine comportant une pluralité d'aubes à angle de calage variable telles que définies précédemment.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
- la figure 1 est une vue en coupe d'une aube à angle de calage variable selon l'invention ; et
- la figure 2 est une vue partielle et en coupe d'une aube à angle de calage variable selon une variante de réalisation de l'invention.

### Description détaillée de modes de réalisation

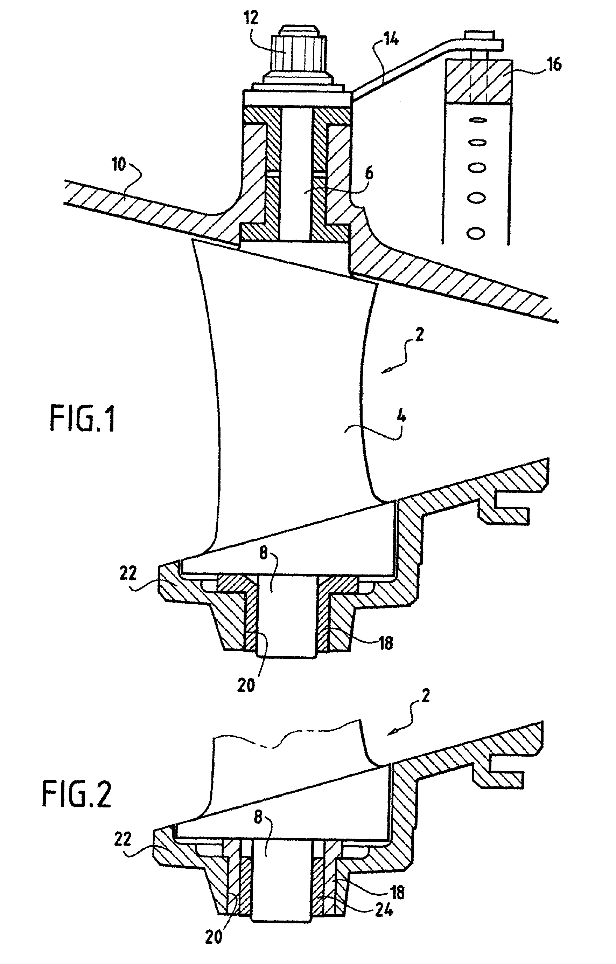

En liaison avec la figure 1, les aubes 2 à angle de calage variable du compresseur haute-pression de la turbomachine sont réparties en étages circulaires disposés entre des étages d'aubes mobiles (non représentées) qui sont fixées sur un rotor (non représenté) de la turbomachine.

Chaque aube 2 à angle de calage variable d'un étage circulaire se présente sous la forme d'une pale 4 se terminant à une extrémité radiale externe (ou tête d'aube) par un pivot de commande 6 (ou pivot supérieur) et à une extrémité radiale interne (ou pied d'aube) par un pivot de guidage 8 (ou pivot inférieur).

Le pivot de commande 6 traverse une enveloppe 10 de stator de la turbomachine et coopère avec un organe de commande de l'orientation des aubes. A cet effet, le pivot de commande 6 se termine par une tête 12 sur laquelle est engagée une extrémité d'une bielle de commande 14 dont l'autre extrémité coopère avec un anneau de commande 16.

Les bielles 14 et l'anneau 16 de commande forment l'organe de commande de l'orientation des aubes. La rotation de l'anneau de commande 16 autour de l'axe de la turbomachine permet de faire tourner les bielles de commande 14 et ainsi de modifier simultanément l'orientation de toutes les aubes 2 à angle de calage variable d'un même étage du compresseur haute-pression.

Le pivot de guidage 8 de l'aube est destiné à tourner à l'intérieur d'une douille creuse 18 sensiblement cylindrique formant support pivotant. Chaque douille 18 est logée dans un évidement 20 formé dans un anneau intérieur 22 du carter de la turbomachine, la douille et l'évidement étant de formes sensiblement complémentaires.

Selon l'invention, le contact rotatif entre la douille 18 et le pivot de guidage 8 de l'aube est du type nickel graphite / titane.

Par contact du type nickel graphite / titane, on entend que le contact rotatif entre la douille 18 et le pivot de guidage 8 de l'aube comporte une première surface de contact et une seconde surface de contact adjacente à la première, la première surface étant constituée d'un matériau à base de nickel et de graphite, et la seconde surface étant constituée d'un matériau à base de titane.

Dans les conditions d'utilisation d'un contact rotatif continu entre la douille et le pivot de guidage, le couple nickel graphite / titane présente d'extraordinaires performances par sa grande résistance à l'usure et son faible coefficient de frottement.

En effet, le contact rotatif entre la douille et le pivot de guidage passe par une période de rodage qui se caractérise par un frottement initial entre les pics d'aspérité des surfaces NiGr et Ti. Ce frottement entraîne un échauffement local très élevé, notamment pour le titane (qui possède un faible coefficient de conductivité de la chaleur). La température très élevée du titane associée au NiGr conduit alors à la formation de carbure de titane (TiC) qui se dépose sur les surfaces de contact entre la douille et le pivot de guidage et assure ainsi une dureté localement élevée qui limite l'usure des surfaces en contact.

Des essais comparatifs ont été réalisés pour différents couples dans les mêmes conditions de frottement et pour la même durée. Le tableau ci-dessous résume les résultats obtenus (l'unité de mesure de l'usure observée est arbitraire).

| | Usure NiGr | Usure antagoniste |
|---|---|---|
| Couple NiGr/Waspalloy^{®} | 0,9 | 1 |
| Coupe NiGr/Ta6V | 0,1 | 0,1 |

Le Waspalloy^{®} utilisé dans le premier couple de cet essai est un alliage connu à base de nickel. Quant au titane TA6V utilisé dans le couple du second test, il s'agit d'un alliage connu à base de titane et comportant de l'aluminium et du vanadium.

De ces essais, on constate donc que les surfaces en contact de la douille et du pivot de guidage de l'aube sont très faiblement usées (de 9 à 10 fois moins usées que pour le couple NiGr / Waspalloy^{®}).

Plusieurs mises en oeuvre d'un tel couple nickel graphite / titane sont envisageables pour l'invention selon le matériau utilisé pour la réalisation de l'aube et de son pivot de guidage.

Ainsi, lorsque le pivot de guidage 8 de l'aube est constitué d'un matériau à base de titane, la douille 18 est, conformément à l'invention, constituée d'un matériau à base de nickel et de graphite.

Dans ce mode de réalisation, la douille peut être obtenue par frittage d'une poudre à base de nickel et de graphite dans un moule. Un exemple d'un tel procédé de frittage est appelé MIM (pour « Metal Injection Molding ») : il consiste à injecter une poudre à base de nickel et de graphite associée à un liant organique dans un moule, puis à éliminer chimiquement le liant organique lorsque la douille est formée. Un autre exemple d'un tel procédé de frittage est appelé SPS (pour « Spark Plasma Sintering ») : par rapport aux autres procédés de frittage, la source de chaleur utilisée dans ce procédé provient d'un courant électrique qui passe au travers de l'enceinte de pressage (ce qui permet d'obtenir des vitesses de chauffage élevées).

Lorsque le pivot de guidage 8 de l'aube n'est pas constitué d'un matériau à base de titane (par exemple parce qu'il est réalisé dans un alliage à base d'acier), le pivot de guidage peut être recouvert, conformément à l'invention, d'un dépôt de nickel graphite, la douille 18 étant alors constituée d'un matériau à base de titane.

Le dépôt de nickel graphite sur le pivot de guidage de l'aube peut être réalisé par projection thermique d'une poudre à base de nickel et de graphite. A cet effet, un écran doit être de préférence utilisé pour que l'angle entre la trajectoire de la poudre projetée et la tangente au pivot au point d'impact soit inférieur à 45° environ afin d'assurer une adhérence correcte de la poudre sur le pivot.

Selon une alternative représentée sur la figure 2, toujours dans le cas d'un pivot de guidage 8 qui n'est pas constitué d'un matériau métallique à base de titane, l'aube selon l'invention comporte en outre une frette métallique 24 qui est recouverte d'un dépôt de nickel graphite et frettée sur le pivot de guidage, la douille 18 étant alors constituée d'un matériau à base de titane.

Dans ce mode de réalisation, le dépôt de nickel graphite sur la frette 24 de l'aube peut être réalisé par projection thermique d'une poudre à base de nickel et de graphite. A cet effet, un écran doit être de préférence utilisé pour que l'angle entre la trajectoire de la poudre projetée et la tangente à la frette au point d'impact soit inférieur à 45° environ afin d'assurer une adhérence correcte de la poudre sur la frette.

Selon encore une alternative non représentée sur les figures, toujours dans le cas d'un pivot de guidage qui n'est pas constitué d'un matériau métallique à base de titane, l'aube selon l'invention comporte en outre une frette qui est constituée d'un matériau à base de nickel et de graphite et qui est frettée sur le pivot de guidage, la douille étant alors constituée d'un matériau à base de titane.

Dans ce cas, la frette est avantageusement obtenue par frittage d'une poudre à base de nickel et de graphite dans un moule selon les procédés MIM ou SPS précédemment décrits.

## Revendications

1. Aube à angle de calage variable pour compresseur de turbomachine, comportant une douille (18) montée de façon rotative autour d'un pivot de guidage (8) de l'aube destiné à être monté sur un carter (22) de la turbomachine, **caractérisée en ce que** le contact rotatif entre la douille (18) et le pivot de guidage (8) comporte une première surface de contact et une seconde surface de contact adjacente à la première, la première surface étant constituée d'un matériau à base de nickel et de graphite, et la seconde surface étant constituée d'un matériau à base de titane.

2. Aube selon la revendication 1, dans laquelle le pivot de guidage (8) est constitué d'un matériau à base de titane, **caractérisée en ce que** la douille (18) est constituée d'un matériau à base de nickel et de graphite.

3. Aube selon la revendication 2, dans laquelle la douille (18) est obtenue par frittage d'une poudre à base de nickel et de graphite dans un moule.

4. Aube selon la revendication 1, dans laquelle le pivot de guidage (8) n'est pas constitué d'un matériau métallique à base de titane, **caractérisée en ce que** ledit pivot de guidage est recouvert d'un dépôt de nickel graphite et la douille (18) est constituée d'un matériau à base de titane.

5. Aube selon la revendication 1, dans laquelle le pivot de guidage (8) n'est pas constitué d'un matériau métallique à base de titane, **caractérisée en ce que** l'aube comporte en outre une frette (24) métallique recouverte d'un dépôt de nickel graphite et frettée sur le pivot de guidage, la douille (18) étant constituée d'un matériau à base de titane.

6. Aube selon la revendication 1, dans laquelle le pivot de guidage (8) n'est pas constitué d'un matériau métallique à base de titane, **caractérisée en ce que** l'aube comporte en outre une frette constituée d'un matériau à base de nickel et de graphite et frettée sur le pivot de guidage, la douille (18) étant constituée d'un matériau à base de titane.

7. Aube selon la revendication 6, **caractérisée en ce que** la frette est obtenue par frittage d'une poudre à base de nickel et de graphite dans un moule.

8. Aube selon l'une des revendications 4 et 5, **caractérisée en ce que** le dépôt de nickel graphite est réalisé par projection thermique d'une poudre à base de nickel et de graphite.

9. Compresseur de turbomachine **caractérisé en ce qu'**il comporte une pluralité d'aubes (2) à angle de calage variable selon l'une quelconque des revendications 1 à 8.

10. Turbomachine **caractérisée en ce qu'**elle comporte une pluralité d'aubes (2) à angle de calage variable selon l'une quelconque des revendications 1 à 8.

## Claims

1. A variable-pitch vane for a turbomachine compressor, the vane including a bushing (18) mounted to pivot about a guide pivot (8) of the vane that is intended to be mounted in a casing (22) of the turbomachine, the vane being **characterized in that** the pivoting contact between the bushing (18) and the guide pivot (8) comprises a first surface of contact and a second surface of contact adjacent to the first one, the first surface being made of a material based on nickel and on graphite, and the second surface being made of a titanium-based material.

2. A vane according to claim 1, in which the guide pivot (8) is made of a titanium-based material, the vane being **characterized in that** the bushing (18) is constituted by a material based on nickel and on graphite.

3. A vane according to claim 2, in which the bushing (18) is obtained by sintering a powder based on nickel and on graphite in a mold.

4. A vane according to claim 1, in which the guide pivot (8) is not constituted by a titanium-based metallic material, the vane being **characterized in that** said guide pivot is covered by a deposit of nickel-graphite, and the bushing (18) is constituted by a titanium-based material.

5. A vane according to claim 1, in which the guide pivot (8) is not constituted by a titanium-based metallic material, the vane being **characterized in that** it further includes a metal ferrule (24) covered in a deposit of nickel-graphite and heat-shrunk on the guide pivot, the bushing (18) being constituted by a titanium-based material.

6. A vane according to claim 1, in which the guide pivot (8) is not constituted by a titanium-based metallic material, the vane being **characterized in that** it further includes a ferrule constituted by a material based on nickel and on graphite, and heat-shrunk onto the guide pivot, the bushing (18) being constituted by a titanium-based material.

7. A vane according to claim 6, **characterized in that** the ferrule is obtained by sintering a powder based on nickel and on graphite in a mold.

8. A vane according to claim 4 or claim 5, **characterized in that** the nickel-graphite is deposited by thermally spraying a powder based on nickel and on graphite.

9. A turbomachine compressor, **characterized in that** it includes a plurality of variable-pitch vanes (2) according to any one of claims 1 to 8.

10. A turbomachine, **characterized in that** it includes a plurality of variable-pitch vanes (2) according to any one of claims 1 to 8.

## Patentansprüche

1. Schaufel mit variablem Einstellwinkel für einen Verdichter einer Turbomaschine, umfassend eine Hülse (18), die um einen Führungszapfen (8) der Schaufel drehbar angebracht ist, welcher dazu bestimmt ist, an einem Gehäuse (22) der Turbomaschine angebracht zu werden, **dadurch gekennzeichnet, daß** der Drehkontakt zwischen der Hülse (18) und dem Führungszapfen (8) eine erste Kontaktfläche und eine an die erste angrenzende zweite Kontaktfläche umfaßt, wobei die erste Fläche aus einem Werkstoff auf Nickel- und Graphitbasis und die zweite Fläche aus einem Werkstoff auf Titanbasis besteht.

2. Schaufel nach Anspruch 1, bei welcher der Führungszapfen (8) aus einem Werkstoff auf Titanbasis besteht, **dadurch gekennzeichnet, daß** die Hülse (18) aus einem Werkstoff auf Nickel- und Graphitbasis besteht.

3. Schaufel nach Anspruch 2, bei der die Hülse (18) durch Sintern eines Pulvers auf Nickel- und Graphitbasis in einer Form erhalten wird.

4. Schaufel nach Anspruch 1, bei welcher der Führungszapfen (8) nicht aus einem metallischen Werkstoff auf Titanbasis besteht, **dadurch gekennzeichnet, daß** der Führungszapfen mit einer Nickel-Graphit-Schicht überzogen ist und die Hülse (18) aus einem Werkstoff auf Titanbasis besteht.

5. Schaufel nach Anspruch 1, bei welcher der Führungszapfen (8) nicht aus einem metallischen Werkstoff auf Titanbasis besteht, **dadurch gekennzeichnet, daß** die Schaufel ferner einen Metallring (24) aufweist, der mit einer Nickel-Graphit-Schicht überzogen und auf den Führungszapfen aufgeschrumpft ist, wobei die Hülse (18) aus einem Werkstoff auf Titanbasis besteht.

6. Schaufel nach Anspruch 1, bei welcher der Führungszapfen (8) nicht aus einem metallischen Werkstoff auf Titanbasis besteht, **dadurch gekennzeichnet, daß** die Schaufel ferner einen Ring aufweist, der aus einem Werkstoff auf Nickel- und Graphitbasis besteht und auf den Führungszapfen aufgeschrumpft ist, wobei die Hülse (18) aus einem Werkstoff auf Titanbasis besteht.

7. Schaufel nach Anspruch 6, **dadurch gekennzeichnet, daß** der Ring durch Sintern eines Pulvers auf Nickel- und Graphitbasis in einer Form erhalten wird.

8. Schaufel nach einem der Ansprüche 4 und 5, **dadurch gekennzeichnet, daß** die Nickel-Graphit-Schicht durch thermisches Spritzen eines Pulvers auf Nickel- und Graphitbasis hergestellt wird.

9. Verdichter einer Turbomaschine, **dadurch gekennzeichnet, daß** er eine Vielzahl von Schaufeln (2) mit variablem Einstellwinkel nach einem der Ansprüche 1 bis 8 umfaßt.

10. Turbomaschine, **dadurch gekennzeichnet, daß** sie eine Vielzahl von Schaufeln (2) mit variablem Einstellwinkel nach einem der Ansprüche 1 bis 8 aufweist.
